# EUROPEAN PATENT APPLICATION

(11) **EP 4 524 202 A1**
(43) Date of publication of application: **19.03.2025**
(21) Application number: 22941759.7
(22) Date of filing: 16.11.2022
(51) Int. Cl.: C08L 77/00, C08K 5/10, C08K 5/435, C08L 23/00, C08L 23/26, C08L 101/00, F16L 11/04

(54) **POLYAMIDE RESIN COMPOSITION FOR SINGLE-LAYER HOLLOW MOLDED BODY**

(30) Priority: 13.05.2022 JP 2022079651
(71) Applicant: UBE Corporation, Ube-shi, Yamaguchi 755-8633 (JP)
(72) Inventor: NOZAKI, Natsumi, Ube-shi, Yamaguchi 755-8633 (JP); SASAKI, Ryousuke, Ube-shi, Yamaguchi 755-8633 (JP); KUSUMOTO, Takaaki, Ube-shi, Yamaguchi 755-8633 (JP); HERRERO PONS, Roser, 12100 Grao de Castellon (ES); GONZALEZ SANUDO, Almudena, 12100 Grao de Castellon (ES)
(74) Representative: Hoffmann Eitle
(86) International application number: PCT/JP2022/042505
(87) International publication number: WO 2023/218686

(57) **Abstract**

Provided is a polyamide resin composition for a single-layer hollow molded body having polyamide 6 as the main component, substantially without using polyamide 11 and polyamide 12, wherein the properties are equivalent to those of a multilayered hollow molded body, the extrusion moldability of the hollow molded body is excellent, and the flexibility, impact resistance, and durability of the obtained molded body are excellent.

The polyamide resin composition is a polyamide resin composition for extrusion molding to produce a single-layer hollow molded body, which contains polyamide 6 (a), a polyolefin (b) having a functional group, and a plasticizer (c); the relative viscosity of the polyamide 6 (a), measured at 25°C when 1 g of the polyamide 6 (a) is dissolved in 100 mL of 96% sulfuric acid in accordance with JIS K6920, is 3.0-4.5; 100 mass% of polyamide resin composition contains 60-90 mass% of the polyamide 6 (a), 3-25 mass% of the polyolefin (b) having a functional group, and 3-20 mass% of the plasticizer (c); and the polyolefin (b) having a functional group is a copolymer of ethylene and a C4 or higher α-olefin having a group derived from at least one selected from the group consisting of maleic anhydride and itaconic anhydride.

## Description

### TECHNICAL FIELD

The present invention relates to a polyamide resin composition for a single-layer hollow molded article and a single-layer hollow molded article.

### BACKGROUND ART

In hydraulic tubes for power transmission for general industry, and chemical liquid and/or gas transfer tubes for automotive piping, such as pneumatic tubes for automotive air brake, from the viewpoint of the reduction of weight and the operation properties (assembly operation), the main material for the tube is being changed from a metal to a lightweight resin having excellent rust preventive properties. Generally, as a material for a chemical liquid and/or gas transfer tube, polyamide 11 or polyamide 12 having, e.g., excellent strength, toughness, chemical resistance, flexibility, and hollow moldability is used.

However, with respect to long chain polyamide, such as polyamide 11 and polyamide 12, there are few manufacturers, as compared to those of short chain polyamide, such as polyamide 6, and moreover, manufacturers of monomers which are raw materials for the long chain polyamide are limited, and thus a supply of the long chain polyamide is unstable. For this reason, there is required a composition which uses polyamide 11 and/or polyamide 12 in a reduced amount and maintains performance equivalent to that of the composition containing polyamide 11 and/or polyamide 12.

For example, Patent Literature 1 discloses that when a plasticizer and a modified polyolefin in specific amounts are added to polyamide 6/12 which is used as a substitute for polyamide 12, a polyamide resin composition having flexibility and other properties equivalent to those of polyamide 12 and having excellent moldability can be obtained.

Further, there has been known a polyamide resin composition which uses, for example, polyamide 6 as a polyamide resin, and which does not use polyamide 11 and polyamide 12. For example, Patent Literature 2 discloses a polyamide resin composition containing, for example, a polyamide resin, such as polyamide 6, a reinforcing material for impact, and a nylon plasticizer in a predetermined ratio, and has shown that the polyamide resin composition can be applied to an automotive fuel tube system. In the working Examples of Patent Literature 2, injection molded articles are evaluated in respect of, e.g., physical properties and appearance.

Patent Literature 3 discloses a laminated tube having at least 4 layers or more, wherein the (b) layer contains, for example, a polyamide 6 composition (B1). Polyamide 6 is unsuitable for the production of a hollow molded article by extrusion molding, as compared to polyamide 12, and generally, polyamide 6 is not used for producing a molded article of a single layer containing polyamide 6, but, as shown in Patent Literature 3, is used in a multi-layer hollow molded article having a combination of a layer of polyamide 6 and a resin layer which is suitable for the production of a hollow molded article by extrusion molding.

### CITATION LIST

### Patent Literature

Patent Literature 1: WO 2013/058027 A1
Patent Literature 2: JP 2001-172498 A
Patent Literature 3: WO 2016/039445 A1

### SUMMARY OF INVENTION

### Technical Problem

In recent years, from the viewpoint of the productivity and an economical efficiency, there is an increasing demand for a polyamide resin composition for a single-layer hollow molded article, which uses polyamide 11 and polyamide 12 in a reduced amount or uses neither polyamide 11 nor polyamide 12.

The polyamide 6/12 of Patent Literature 1 uses no polyamide 12, but has a high ratio of laurolactam or aminododecanoic acid in the monomers, and polyamide having a lower or zero ratio of laurolactam or aminododecanoic acid is required. With respect to the composition containing polyamide 6 of Patent Literature 2, the molded article in the working Examples is molded by injection molding which is suitable for polyamide 6, and, in Patent Literature 2, there is not a working Example such that a hollow molded article is produced from the composition by extrusion molding, and thus it is unclear that a single-layer hollow molded article can be molded by extrusion molding. Patent Literature 3 merely discloses the use of a layer of the composition containing polyamide 6 in one layer of the laminated tube having at least 4 layers or more, and does not have a description that teaches or suggests a single-layer hollow molded article.

A task of the present invention is to provide a polyamide resin composition for a single-layer hollow molded article, which substantially does not use polyamide 11 and polyamide 12, and which contains polyamide 6 as a main component, wherein the composition is advantageous not only in that the composition exhibits excellent extrusion moldability for a hollow molded article, but also in that the molded article obtained from the composition has properties equivalent to those of a multi-layer hollow molded article and has excellent flexibility and excellent impact resistance as well as excellent durability.

### Solution to Problem

The present inventors have conducted extensive and intensive studies with a view toward solving the above-mentioned problems. As a result, it has been found that the polyamide resin composition containing predetermined polyamide 6, a polyolefin having a functional group, and a plasticizer exhibits excellent extrusion moldability for a hollow molded article even when the hollow molded article is of a single layer, and that the molded article obtained from the composition has excellent flexibility and excellent impact resistance as well as excellent durability, and the present invention has been completed.

The present invention is directed to the following items [1] to [13].
[1] A polyamide resin composition for extrusion molding, which is used for producing a single-layer hollow molded article, the polyamide resin composition comprising a polyamide 6 (a), a polyolefin (b) having a functional group, and a plasticizer (c), the polyamide 6 (a) having a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 4 or more carbon atoms, which has a group derived from at least one member selected from the group consisting of maleic anhydride and itaconic anhydride.
[2] A polyamide resin composition for extrusion molding, which is used for producing a single-layer hollow molded article, the polyamide resin composition comprising a polyamide 6 (a), a polyolefin (b) having a functional group, and a plasticizer (c), the polyamide 6 (a) having a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 66 to 89% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 3 or more carbon atoms, which has a group derived from at least one member selected from the group consisting of maleic anhydride and itaconic anhydride.
[3] A polyamide resin composition for extrusion molding, which is used for producing a single-layer hollow molded article, the polyamide resin composition comprising a polyamide 6 (a), a polyolefin (b) having a functional group, and a plasticizer (c), and containing substantially zero ethylene-vinyl acetate, the polyamide 6 (a) having a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 3 or more carbon atoms, which has a group derived from at least one member selected from the group consisting of maleic anhydride and itaconic anhydride.
[4] The polyamide resin composition according to any one of items [1] to [3] above, wherein the polyolefin (b) having a functional group is an ethylene/1-butene copolymer having a group derived from at least one member selected from the group consisting of maleic anhydride and itaconic anhydride.
[5] The polyamide resin composition according to any one of items [1] to [4] above, wherein the plasticizer (c) is at least one member selected from the group consisting of an alkylbenzenesulfonamide, an alkyltoluenesulfonamide, and an alkyl hydroxybenzoate.
[6] The polyamide resin composition according to any one of items [1] to [5] above, which contains a thermoplastic resin (d) other than the polyamide 6 (a) and the polyolefin (b) having a functional group.
[7] The polyamide resin composition according to item [6] above, wherein the thermoplastic resin (d) is an aliphatic copolymer polyamide resin.
[8] The polyamide resin composition according to claim [7] above, wherein the aliphatic copolymer polyamide resin is at least one member selected from the group consisting of polyamide 6/12, polyamide 6/66/12, polyamide 6/11, polyamide 6/66/11, polyamide 6/610/12, and polyamide 6/612/12.
[9] The polyamide resin composition according to item [7] or [8] above, wherein monomer units derived from caprolactam and aminohexanoic acid are contained in an amount of 60.0 to 99.5% by mass, based on 100% by mass of the total of the polyamide 6 (a) and the aliphatic copolymer polyamide resin.
[10] The polyamide resin composition according to any one of items [7] to [9] above, wherein monomer units derived from laurolactam, aminododecanoic acid, undecanelactam, and aminoundecanoic acid are contained in an amount of 0.25 to 20.0% by mass, based on 100% by mass of the total of the polyamide 6 (a) and the aliphatic copolymer polyamide resin.
[11] The polyamide resin composition according to any one of items [7] to [10] above, wherein monomer units derived from adipic acid and hexamethylenediamine are contained in an amount of 0.25 to 20.0% by mass, based on 100% by mass of the total of the polyamide 6 (a) and the aliphatic copolymer polyamide resin.
[12] A single-layer hollow molded article comprising the polyamide resin composition according to any one of items [1] to [11] above.
[13] The single-layer hollow molded article according to item [12] above, which is at least one selected from the group consisting of a pipe, a tube, a hose, and a tank.

### Advantageous Effects of Invention

In the present invention, there is provided a polyamide resin composition for a single-layer hollow molded article, which substantially does not use polyamide 11 and polyamide 12, and which contains polyamide 6 as a main component, wherein the composition is advantageous not only in that the composition exhibits excellent extrusion moldability for a hollow molded article, but also in that the molded article obtained from the composition, which is not a multi-layer hollow molded article, has properties equivalent to those of a multi-layer hollow molded article and has excellent flexibility and excellent impact resistance as well as excellent durability.

### DESCRIPTION OF EMBODIMENTS

In the present specification, the name of a polyamide resin is according to JIS K 6920-1. With respect to the amount of each of the components contained in the composition, when a plurality of materials corresponding to a component are present in the composition, the amount of the component means the total amount of the materials unless otherwise specified.

In the present specification, the wording "substantially does not use" means that polyamide 11 and polyamide 12 are not intentionally used as a raw material. It is preferred that the polyamide resin composition substantially does not contain polyamide 11 and polyamide 12. Specifically, the expressions that the polyamide resin composition "substantially does not use" polyamide 11 and polyamide 12 and that the polyamide resin composition "substantially does not contain" polyamide 11 and polyamide 12 mean that the total content of polyamide 11 and polyamide 12 in the polyamide resin composition (100% by mass) is less than 0.1% by mass, preferably less than 0.05% by mass, and more preferably less than 0.01% by mass.

In the present specification, the wording "containing substantially zero ethylene-vinyl acetate" used with respect to the ethylene-vinyl acetate means that the content of the ethylene-vinyl acetate in the polyamide resin composition (100% by mass) is less than 0.1% by mass, preferably less than 0.05% by mass, and more preferably less than 0.01% by mass.

The first embodiment of the present invention is a polyamide resin composition for extrusion molding, which is used for producing a single-layer hollow molded article, the polyamide resin composition comprising a polyamide 6 (a), a polyolefin (b) having a functional group, and a plasticizer (c), wherein the polyamide 6 (a) has a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 4 or more carbon atoms, which has a group derived from at least one member selected from the group consisting of maleic anhydride and itaconic anhydride.

Polyamide 6 (a) has a relative viscosity of 3.0 to 4.5 and the amount of polyamide 6 (a) contained is 60 to 90% by mass, and further component (b) is a copolymer of ethylene and an α-olefin having 4 or more carbon atoms, which has a group derived from at least one member selected from the group consisting of maleic anhydride and itaconic anhydride, and therefore, even when a single-layer hollow molded article is produced from the polyamide resin composition which substantially does not use polyamide 11 and polyamide 12, the polyamide resin composition exhibits excellent extrusion moldability for a hollow molded article, and the molded article obtained from the composition has excellent flexibility and excellent impact resistance as well as excellent durability.

The second embodiment of the present invention is a polyamide resin composition for extrusion molding, which is used for producing a single-layer hollow molded article, the polyamide resin composition comprising a polyamide 6 (a), a polyolefin (b) having a functional group, and a plasticizer (c), wherein the polyamide 6 (a) has a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 66 to 89% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 3 or more carbon atoms, which has a group derived from at least one member selected from the group consisting of maleic anhydride and itaconic anhydride.

Polyamide 6 (a) has a relative viscosity of 3.0 to 4.5 and the amount of polyamide 6 (a) contained is 66 to 89% by mass, and further component (b) is a copolymer of ethylene and an α-olefin having 3 or more carbon atoms, which has a group derived from at least one member selected from the group consisting of maleic anhydride and itaconic anhydride, and therefore, even when a single-layer hollow molded article is produced from the polyamide resin composition which substantially does not use polyamide 11 and polyamide 12, the polyamide resin composition exhibits excellent extrusion moldability for a hollow molded article, and the molded article obtained from the composition has excellent flexibility and excellent impact resistance as well as excellent durability.

The third embodiment of the present invention is a polyamide resin composition for extrusion molding, which is used for producing a single-layer hollow molded article, the polyamide resin composition comprising a polyamide 6 (a), a polyolefin (b) having a functional group, and a plasticizer (c), and containing substantially zero ethylene-vinyl acetate, wherein the polyamide 6 (a) has a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 3 or more carbon atoms, which has a group derived from at least one member selected from the group consisting of maleic anhydride and itaconic anhydride.

Polyamide 6 (a) has a relative viscosity of 3.0 to 4.5 and the amount of polyamide 6 (a) contained is 60 to 90% by mass, and further component (b) is a copolymer of ethylene and an α-olefin having 3 or more carbon atoms, which has a group derived from at least one member selected from the group consisting of maleic anhydride and itaconic anhydride, and therefore, even when a single-layer hollow molded article is produced from the polyamide resin composition which substantially does not use polyamide 11 and polyamide 12, the polyamide resin composition exhibits excellent extrusion moldability for a hollow molded article, and the molded article obtained from the composition has excellent flexibility and excellent impact resistance as well as excellent durability. Further, a hollow molded article having no micro-protrusion and having excellent appearance can be obtained even from the polyamide resin composition containing substantially zero ethylene-vinyl acetate, and, by virtue of containing substantially zero ethylene-vinyl acetate, a hollow molded article having excellent heat resistance can be obtained.

The present invention is also directed to a single-layer hollow molded article comprising any one of the polyamide resin compositions of the first to third embodiments. The single-layer hollow molded article comprising the polyamide resin composition of the first embodiment is specifically as follows: a single-layer hollow molded article comprising the polyamide resin composition which comprises a polyamide 6 (a), a polyolefin (b) having a functional group, and a plasticizer (c), wherein the polyamide 6 (a) has a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition , wherein the polyolefin (b) having a functional group is a copolymer of ethylene and an α-olefin having 4 or more carbon atoms, which has a group derived from at least one member selected from the group consisting of maleic anhydride and itaconic anhydride. The single-layer hollow molded article comprising the polyamide resin composition of the second or third embodiment is similar to the one comprising the polyamide resin composition of the first embodiment.

The present invention is further directed to a method for producing a single-layer hollow molded article, comprising the step of subjecting any one of the polyamide resin compositions of the first to third embodiments to extrusion molding. The method for producing a single-layer hollow molded article from the polyamide resin composition of the first embodiment is specifically as follows: a method for producing a single-layer hollow molded article, comprising the step of subjecting the polyamide resin composition to extrusion molding, wherein the polyamide resin composition comprises a polyamide 6 (a), a polyolefin (b) having a functional group, and a plasticizer (c), wherein the polyamide 6 (a) has a relative viscosity of 3.0 to 4.5, as measured at 25°C with respect to 1 g of the polyamide 6 (a) dissolved in 100 ml of 96% sulfuric acid in accordance with JIS K 6920, the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 4 or more carbon atoms, which has a group derived from at least one member selected from the group consisting of maleic anhydride and itaconic anhydride. The method for producing a single-layer hollow molded article from the polyamide resin composition of the second or third embodiment is similar to the method for the polyamide resin composition of the first embodiment.

The present invention is further directed to use of or a method for using any one of the polyamide resin compositions of the first to third embodiments for producing a single-layer hollow molded article by extrusion molding. Use of or a method for using the polyamide resin composition of the first embodiment is specifically as follows: use of or a method for using the polyamide resin composition for producing a single-layer hollow molded article by extrusion molding, the polyamide resin composition comprising a polyamide 6 (a), a polyolefin (b) having a functional group, and a plasticizer (c), wherein the polyamide 6 (a) has a relative viscosity of 3.0 to 4.5, as measured at 25°C with respect to 1 g of the polyamide 6 (a) dissolved in 100 ml of 96% sulfuric acid in accordance with JIS K 6920, wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition, wherein the polyolefin (b) having a functional group is a copolymer of ethylene and an α-olefin having 4 or more carbon atoms, which has a group derived from at least one member selected from the group consisting of maleic anhydride and itaconic anhydride. Use of or a method for using the polyamide resin composition of the second or third embodiment is similar to the use of or method for using the polyamide resin composition of the first embodiment.

### [Polyamide 6 (a)]

Polyamide 6 (a) is a polyamide resin comprised of constituent units selected from the group consisting of ε-caprolactam and ε-aminocaproic acid. Polyamide 6 (a) may be a single type of polyamide resin or a combination of two or more types of polyamide resins.

Polyamide 6 (a) has a relative viscosity of 3.0 to 4.5, as measured at 25°C with respect to 1 g of polyamide 6 (a) dissolved in 100 ml of 96% sulfuric acid in accordance with JIS K 6920. Polyamide 6 (a) has a relative viscosity in the above-mentioned range, and therefore the polyamide resin composition exhibits excellent extrusion moldability for a hollow molded article even when the hollow molded article is of a single layer, and the molded article obtained from the composition can be improved in rigidity and durability. When the relative viscosity of polyamide 6 (a) is less than 3.0, the polyamide resin composition has such high fluidity that the extrusion moldability for a hollow molded article is poor, and, when the relative viscosity of polyamide 6 (a) is more than 4.5, the polyamide resin composition has such low fluidity that the extrusion moldability for a hollow molded article is poor. In both cases, stable molding is impossible, and the obtained hollow molded article has such poor quality that the dimension is unstable. The relative viscosity of polyamide 6 (a) is 3.0 to 4.5, preferably 3.2 to 4.4, and especially preferably 3.4 to 4.2.

When polyamide 6 (a) comprises two or more polyamide resins having different relative viscosities, it is preferred that the relative viscosity of polyamide 6 (a) is measured in accordance with the above-mentioned method, but, when the relative viscosities of the individual polyamide resin components and the ratios of the polyamide resins mixed are known, an average calculated from a total of values obtained by multiplying the relative viscosities by the respective ratios can be used as a relative viscosity of polyamide 6 (a).

Polyamide 6 (a) is produced by subjecting the polyamide raw materials to polymerization or copolymerization by a known method, such as melt polymerization, solution polymerization, or solid phase polymerization. In the polymerization, a catalyst, such as an amine, can be used. Further, after the polymerization, the obtained resin may be melt-kneaded. A catalyst can be added in an arbitrary stage during the polymerization, or in an arbitrary stage during the melt-kneading after the polymerization, but it is preferred that a catalyst is added in an arbitrary stage during the polymerization.

The amount of polyamide 6 (a) contained in 100% by mass of the polyamide resin composition is 60 to 90% by mass, preferably 60 to 88% by mass, more preferably 65 to 85% by mass, further preferably 66 to 84% by mass, and especially preferably 67 to 84% by mass. The amount of polyamide 6 (a) contained is in the above-mentioned range, and therefore the polyamide resin composition exhibits excellent extrusion moldability for a hollow molded article even when the hollow molded article is of a single layer, and the molded article obtained from the composition can be improved in rigidity, impact resistance, and heat resistance. When the amount of polyamide 6 (a) is less than 60% by mass, the obtained molded article has poor rigidity, impact resistance, and heat resistance, and, when the amount of polyamide 6 (a) is more than 90% by mass, the composition has poor extrusion moldability for a hollow molded article.

In the first and third embodiments, the amount of polyamide 6 (a) contained in 100% by mass of the polyamide resin composition is 60 to 90% by mass, preferably 60 to 88% by mass, more preferably 65 to 85% by mass, further preferably 66 to 84% by mass, and especially preferably 67 to 84% by mass. Further, the amount of polyamide 6 (a) contained in 100% by mass of the polyamide resin composition can be 66 to 89% by mass.

In the second embodiment, the amount of polyamide 6 (a) contained in 100% by mass of the polyamide resin composition is 66 to 89% by mass, preferably 66 to 86% by mass, further preferably 66 to 84% by mass, and especially preferably 67 to 84% by mass.

### [Polyolefin (b) having a functional group]

The polyamide resin composition contains polyolefin (b) having a functional group. Polyolefin (b) having a functional group is a component which imparts flexibility and impact resistance to the obtained molded article. Polyolefin (b) contains in the molecule thereof a functional group having affinity with polyamide 6 (a), and therefore it is presumed that the amino group of polyamide 6 and the functional group of the polyolefin have therebetween reactivity and bonding property (for example, hydrogen bond), improving the impact resistance of a molded article formed from the polyamide resin composition. Polyolefin (b) having a functional group may be a single type of polyolefin or a combination of two or more types of polyolefins.

Examples of functional groups for polyolefin (b) having a functional group include a carboxyl group, a carboxylic anhydride group, a carboxylic acid ester group, a carboxylic acid metal salt, a carboxylic acid imide group, a carboxylic acid amide group, and an epoxy group. It is considered that the amino group of polyamide 6 (a) and at least part of the functional group are reacted with each other. Especially, from the viewpoint of the improvement of the impact resistance, preferred is at least one member selected from the group consisting of a carboxyl group, a carboxylic acid ester group, and a carboxylic anhydride group, and more preferred is a carboxylic anhydride group.

As examples of the method for introducing the above-mentioned functional group into a polyolefin, there can be mentioned (i) a method in which a copolymerizable monomer having a functional group is copolymerized with the polyolefin being polymerized, (ii) a method in which the functional group is introduced into the molecular chain or the end of molecule of the polyolefin using, for example, a polymerization initiator or a chain transfer agent, and (iii) a method in which a compound having the functional group and a functional group capable of grafting (grafting compound) is grafted on the polyolefin. These methods for introducing the functional group can be used individually or in appropriate combination.

Examples of the copolymerizable monomers having a functional group and the grafting compounds include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and metal salts of the above carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. These compounds can be used individually or in combination. Of these, maleic anhydride, itaconic anhydride, or citraconic anhydride is preferred, maleic anhydride or itaconic anhydride is further preferred, and maleic anhydride is especially preferred.

From the viewpoint of the effect of improvement of the low-temperature impact resistance and the fluidity of the polyamide resin composition, the amount of the functional group contained in polyolefin (b) having a functional group, in terms of the molar number (mmol) of the functional group/the mass (kg) of polyolefin (b), is preferably 25 to less than 200 mmol/kg, more preferably 35 to less than 150 mmol/kg, and especially preferably 40 to 120 mmol/kg. For example, when polyolefin (b) has a carboxyl group, an acid anhydride group, or a carboxylic acid ester group, the amount of the functional group contained in polyolefin (b) having a functional group is measured by neutralization titration of a 0.1 mol/L KOH ethanol solution using a sample solution prepared using toluene and ethanol, and using phenolphthalein as an indicator.

From the viewpoint of the effect of improvement of the flexibility, the polyolefin in polyolefin (b) having a functional group is preferably an (ethylene and/or propylene)/α-olefin copolymer. Specifically, examples of polyolefin (b) having a functional group include an (ethylene and/or propylene)/α-olefin copolymer having the functional group and an (ethylene and/or propylene)/(α,β-unsaturated carboxylic acid and/or α,β-unsaturated carboxylate) copolymer having the functional group or having no functional group, and these can be used individually or in combination.

The (ethylene and/or propylene)/α-olefin copolymer is a polymer obtained by copolymerizing ethylene and an α-olefin having 3 or more carbon atoms and/or a polymer obtained by copolymerizing propylene and an α-olefin having 4 or more carbon atoms. From the viewpoint of the flexibility and impact resistance of the obtained molded article, the upper limit of the number of carbon atoms of the α-olefin is preferably 20, and more preferably 10. Examples of α-olefins having 3 or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. These olefins can be used individually or in combination. Of these, from the viewpoint of the flexibility, impact resistance, and durability of the obtained molded article, preferred is an (ethylene/α-olefin having 3 or more carbon atoms) copolymer, more preferred is an ethylene/propylene copolymer or an ethylene/1-butene copolymer, and especially preferred is an ethylene/1-butene copolymer.

The (ethylene and/or propylene)/α-olefin copolymer may be copolymerized with a polyene of a non-conjugated diene, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbomene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbomene, 2-ethylidene-3-isopropylidene-5-norbornene, or 2-propenyl-2,5-norbomadiene. These polyenes can be used individually or in combination.

In the (ethylene/α-olefin having 3 or more carbon atoms) copolymer, the proportion of the α-olefin monomer having 3 or more carbon atoms in the total (100 mol%) of the ethylene monomer and α-olefin monomer having 3 or more carbon atoms constituting the copolymer is preferably more than 5 to 90 mol%, more preferably 7 to 87 mol%, and further preferably 10 to 85 mol%.

The (ethylene and/or propylene)/(α,β-unsaturated carboxylic acid and/or α,β-unsaturated carboxylate) copolymer is a polymer obtained by copolymerizing ethylene and/or propylene and an α,β-unsaturated carboxylic acid and/or α,β-unsaturated carboxylate monomer. Examples of α,β-unsaturated carboxylic acid monomers include acrylic acid and methacrylic acid. Examples of α,β-unsaturated carboxylate monomers include methyl acrylate, methyl methacrylate, ethyl acrylate, ethyl methacrylate, propyl acrylate, propyl methacrylate, butyl acrylate, butyl methacrylate, pentyl acrylate, pentyl methacrylate, hexyl acrylate, hexyl methacrylate, heptyl acrylate, heptyl methacrylate, octyl acrylate, octyl methacrylate, nonyl acrylate, nonyl methacrylate, decyl acrylate, decyl methacrylate, 2-ethylhexyl acrylate, 2-ethylhexyl methacrylate, hydroxyethyl acrylate, hydroxyethyl methacrylate, monomethyl maleate, monomethyl itaconate, dimethyl maleate, and dimethyl itaconate. These monomers can be used individually or in combination.

From the viewpoint of the effect of improvement of the impact resistance, polyolefin (b) having a functional group is more preferably a copolymer of ethylene and an α-olefin having 3 or more carbon atoms, which has a group derived from at least one member selected from the group consisting of maleic anhydride and itaconic anhydride, further preferably an ethylene/propylene copolymer or ethylene/1-butene copolymer having a group derived from maleic anhydride, and especially preferably an ethylene/1-butene copolymer having a group derived from maleic anhydride.

In the first embodiment, polyolefin (b) having a functional group is a copolymer of ethylene and an α-olefin having 4 or more carbon atoms, which has a group derived from at least one member selected from the group consisting of maleic anhydride and itaconic anhydride, preferably a copolymer of ethylene and an α-olefin having 4 to 20 carbon atoms, which has a group derived from at least one member selected from the group consisting of maleic anhydride and itaconic anhydride, more preferably an ethylene/1-butene copolymer having a group derived from at least one member selected from the group consisting of maleic anhydride and itaconic anhydride, and especially preferably an ethylene/1-butene copolymer having a group derived from maleic anhydride.

In the second and third embodiments, polyolefin (b) having a functional group is a copolymer of ethylene and an α-olefin having 3 or more carbon atoms, which has a group derived from at least one member selected from the group consisting of maleic anhydride and itaconic anhydride, preferably a copolymer of ethylene and an α-olefin having 3 to 20 carbon atoms, which has a group derived from at least one member selected from the group consisting of maleic anhydride and itaconic anhydride, and more preferably a copolymer of ethylene and an α-olefin having 4 to 20 carbon atoms, which has a group derived from at least one member selected from the group consisting of maleic anhydride and itaconic anhydride. Further, polyolefin (b) having a functional group can be an ethylene/propylene copolymer or ethylene/1-butene copolymer having a group derived from at least one member selected from the group consisting of maleic anhydride and itaconic anhydride, and, in this case, more preferred is an ethylene/propylene copolymer or ethylene/1-butene copolymer having a group derived from maleic anhydride, and especially preferred is an ethylene/1-butene copolymer having a group derived from maleic anhydride.

Polyolefin (b) having a functional group may contain a polyolefin having no functional group in such an amount that the function and properties of the polyamide resin composition are not sacrificed.

The amount of polyolefin (b) having a functional group contained in 100% by mass of the polyamide resin composition is preferably 3 to 25% by mass, more preferably 7 to 23% by mass, further preferably 10 to 20% by mass, and especially preferably 10 to 15% by mass. The amount of the contained polyolefin (b) having a functional group is in the above-mentioned range, and therefore the extrusion moldability of the composition for a hollow molded article and the impact resistance of the obtained molded article can be improved.

### [Plasticizer (c)]

The polyamide resin composition contains plasticizer (c). By virtue of containing plasticizer (c), it is possible to impart flexibility to the obtained molded article.

From the viewpoint of the flexibility, it is preferred that plasticizer (c) is at least one member selected from the group consisting of an alkylbenzenesulfonamide, an alkyltoluenesulfonamide, and an alkyl hydroxybenzoate.

Examples of alkylbenzenesulfonamides include propylbenzenesulfonamide, butylbenzenesulfonamide, and 2-ethylhexylbenzenesulfonamide. Examples of alkyltoluenesulfonamides include butyl-N-ethyl-o-toluenesulfonamide, butyl-N-ethyl-p-toluenesulfonamide, 2-ethylhexyl-N-ethyl-o-toluenesulfonamide, and 2-ethylhexyl-N-ethyl-p-toluenesulfonamide. Examples of alkyl hydroxybenzoates include ethylhexyl o-hydroxybenzoate, ethylhexyl p-hydroxybenzoate, hexyldecyl o-hydroxybenzoate, hexyldecyl p-hydroxybenzoate, ethyldecyl o-hydroxybenzoate, ethyldecyl p-hydroxybenzoate, octyloctyl o-hydroxybenzoate, octyloctyl p-hydroxybenzoate, decyldodecyl o-hydroxybenzoate, decyldodecyl p-hydroxybenzoate, methyl o-hydroxybenzoate, methyl p-hydroxybenzoate, butyl o-hydroxybenzoate, butyl p-hydroxybenzoate, hexyl o-hydroxybenzoate, hexyl p-hydroxybenzoate, n-octyl o-hydroxybenzoate, n-octyl p-hydroxybenzoate, decyl o-hydroxybenzoate, decyl p-hydroxybenzoate, dodecyl o-hydroxybenzoate, and dodecyl p-hydroxybenzoate. These compounds can be used individually or in combination.

Among these, preferred are alkylbenzenesulfonamides, such as butylbenzenesulfonamide and 2-ethylhexylbenzenesulfonamide; alkyltoluenesulfonamides, such as butyl-N-ethyl-p-toluenesulfonamide and 2-ethylhexyl-N-ethyl-p-toluenesulfonamide; and alkyl hydroxybenzoates, such as ethylhexyl p-hydroxybenzoate, hexyldecyl p-hydroxybenzoate, and ethyldecyl p-hydroxybenzoate, and more preferred are butylbenzenesulfonamide, ethylhexyl p-hydroxybenzoate, and hexyldecyl p-hydroxybenzoate.

The amount of plasticizer (c) contained in 100% by mass of the polyamide resin composition is preferably 3 to 20% by mass, more preferably 7 to 14% by mass, and especially preferably 8 to 13% by mass. When the amount of the contained plasticizer (c) is in the above-mentioned range, the extrusion moldability of the composition for a hollow molded article and the flexibility of the obtained molded article can be improved.

### [Thermoplastic resin (d)]

From the viewpoint of the extrusion moldability for hollow molded article and the flexibility of the molded article, it is preferred that the polyamide resin composition further contains thermoplastic resin (d) other than polyamide 6 (a) and polyolefin (b) having a functional group. The amount of thermoplastic resin (d) contained in 100% by mass of the polyamide resin composition is preferably 20% by mass or less, more preferably 5 to 15% by mass, and further preferably 7 to 13% by mass.

When the polyamide resin composition contains thermoplastic resin (d), the total content of polyamide 6 (a), polyolefin (b) having a functional group, and plasticizer (c) in 100% by mass of the polyamide resin composition is preferably 80 to 98% by mass, more preferably 85 to 95% by mass, and further preferably 87 to 93% by mass.

In this case, the amount of polyamide 6 (a) contained in 100% by mass of the polyamide resin composition is preferably 60 to 85% by mass, more preferably 60 to 80% by mass, and further preferably 60 to 75% by mass. The amount of polyolefin (b) having a functional group contained in 100% by mass of the polyamide resin composition is preferably 3 to 25% by mass, more preferably 7 to 23% by mass, and further preferably 10 to 15% by mass. The amount of plasticizer (c) contained in 100% by mass of the polyamide resin composition is preferably 3 to 20% by mass, more preferably 7 to 14% by mass, and further preferably 8 to 13% by mass.

Examples of thermoplastic resin (d) include polyolefin resins, such as highdensity polyethylene (HDPE), medium-density polyethylene (MDPE), low-density polyethylene (LDPE), linear low-density polyethylene (LLDPE), ultrahigh-molecular-weight polyethylene (UHMWPE), polypropylene (PP), polybutene (PB), and polymethylpentene (TPX); polystyrene resins, such as polystyrene (PS), syndiotactic polystyrene (SPS), a methyl methacrylate/styrene copolymer (MS), and a methyl methacrylate/styrene/butadiene copolymer (MBS); polyester resins, such as polybutylene terephthalate (PBT), polyethylene terephthalate (PET), polyethylene isophthalate (PEI), a poly(ethylene terephthalate/ethylene isophthalate) copolymer (PET/PEI), polytrimethylene terephthalate (PTT), polycyclohexanedimethylene terephthalate (PCT), polyethylene naphthalate (PEN), polybutylene naphthalate (PBN), polyarylate (PAR), liquid crystalline polyester (LCP), polylactic acid (PLA), and polyglycolic acid (PGA); polyether resins, such as polyacetal (POM) and polyphenylene ether (PPO); polysulfone resins, such as polysulfone (PSU), polyether sulfone (PESU), and polyphenyl sulfone (PPSU); polythioether resins, such as polyphenylene sulfide (PPS) and polythioether sulfone (PTES); polyketone resins, such as polyketone (PK), polyether ketone (PEK), polyether ether ketone (PEEK), polyether ketone ketone (PEKK), polyether ether ether ketone (PEEEK), polyether ether ketone ketone (PEEKK), polyether ketone ketone ketone (PEKKK), and polyether ketone ether ketone ketone (PEKEKK); polynitrile resins, such as polyacrylonitrile (PAN), polymethacrylonitrile, an acrylonitrile/styrene copolymer (AS), a methacrylonitrile/styrene copolymer, an acrylonitrile/butadiene/styrene copolymer (ABS), and an acrylonitrile/butadiene copolymer (NBR); polymethacrylate resins, such as polymethyl methacrylate (PMMA) and polyethyl methacrylate (PEMA); polyvinyl resins, such as polyvinyl alcohol (PVA), polyvinylidene chloride (PVDC), polyvinyl chloride (PVC), a vinyl chloride/vinylidene chloride copolymer, and a vinylidene chloride/methyl acrylate copolymer; cellulose resins, such as cellulose acetate and cellulose butyrate; polycarbonate resins, such as polycarbonate (PC); polyimide resins, such as thermoplastic polyimide (TPI), polyether imide, polyester imide, polyamide imide (PAI), and polyester amide imide; thermoplastic polyurethane resins; a polyamide elastomer, a polyurethane elastomer, a polyester elastomer, and a polyamide resin other than polyamide 6, and optionally include fluororesins, such as polyvinylidene fluoride (PVDF), polyvinyl fluoride (PVF), polytetrafluoroethylene (PTFE), polychlorofluoroethylene (PCTFE), a tetrafluoroethylene/ethylene copolymer (ETFE), an ethylene/chlorotrifluoroethylene copolymer (ECTFE), a tetrafluoroethylene/hexafluoropropylene copolymer (FEP), a tetrafluoroethylene/hexafluoropropylene/vinylidene fluoride copolymer (THV), a tetrafluoroethylene/hexafluoropropylene/vinylidene fluoride/perfluoro(alkyl vinyl ether) copolymer, a tetrafluoroethylene/perfluoro(alkyl vinyl ether) copolymer (PFA), a tetrafluoroethylene/hexafluoropropylene/perfluoro(alkyl vinyl ether) copolymer, and a chlorotrifluoroethylene/perfluoro(alkyl vinyl ether)/tetrafluoroethylene copolymer (CPT). These resins can be used individually or in combination. From the viewpoint of the heat resistance, it is preferred that thermoplastic resin (d) does not contain ethylene-vinyl acetate.

From the viewpoint of the compatibility with polyamide 6 (a) and the flexibility of the molded article, it is preferred that thermoplastic resin (d) is a polyamide resin other than polyamide 6.

Examples of polyamide resins other than polyamide 6 include homopolyamide resins other than polyamide 6 and copolymer polyamide resins. Especially, from the viewpoint of the fluidity and extrusion moldability for hollow molded article, aliphatic homopolyamide resins other than polyamide 6 and aliphatic copolymer polyamide resins are preferred, and aliphatic copolymer polyamide resins are more preferred. These resins may be used individually or in combination.

### (Aliphatic homopolyamide resin)

The aliphatic homopolyamide resin is a polyamide resin comprised of one type of constituent unit derived from an aliphatic monomer. The aliphatic homopolyamide resin may be comprised of at least one of one type of a lactam and an aminocarboxylic acid which is a hydrolysate of the lactam, and may be comprised of a combination of one type of a diamine and one type of a dicarboxylic acid. With respect to the combination of a diamine and a dicarboxylic acid, a combination of one type of a diamine and one type of a dicarboxylic acid is regarded as one type of monomer unit.

Examples of lactams include enantholactam, α-pyrrolidone, α-piperidone, ω-octalactam, ω-nonalactam, and ω-decalactam. Examples of aminocarboxylic acids include 7-aminoheptanoic acid, 9-aminononanoic acid, and 10-aminodecanoic acid.

Examples of diamines include aliphatic diamines, such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine; and alicyclic diamines, such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)propane, 1,3-/1,4-bisaminomethylcyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, and norbomanedimethylenediamine.

Examples of dicarboxylic acids include aliphatic dicarboxylic acids, such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid; and alicyclic dicarboxylic acids, such as 1,3-/1,4-cyclohexanedicarboxylic acid, dicyclohexanemethane-4,4'-dicarboxylic acid, and norbomanedicarboxylic acid.

Specific examples of aliphatic homopolyamide resins include polyamide 4, polyamide 7, polyamide 9, polyamide 10, polyamide 44, polyamide 45, polyamide 46, polyamide 48, polyamide 49, polyamide 54, polyamide 55, polyamide 56, polyamide 66, polyamide 410, polyamide 412, polyamide 58, polyamide 59, polyamide 510, polyamide 512, polyamide 64, polyamide 65, polyamide 68, polyamide 69, polyamide 610, polyamide 612, polyamide 96, polyamide 98, polyamide 99, polyamide 105, polyamide 616, polyamide 618, polyamide 910, polyamide 912, polyamide 106, polyamide 108, polyamide 109, polyamide 1010, polyamide 1012, polyamide 125, polyamide 126, polyamide 129, polyamide 1210, polyamide 1212, and polyamide 122. These aliphatic homopolyamide resins can be used individually or in combination. Of these, polyamide 66 is preferred from the viewpoint of easy availability and an economical efficiency and from the viewpoint of the impact resistance, rigidity, durability, and heat resistance of the obtained molded article.

### (Aliphatic copolymer polyamide resin)

The aliphatic copolymer polyamide resin is a polyamide resin comprised of two types or more of constituent units derived from an aliphatic monomer. The constituent units of the aliphatic copolymer polyamide resin are derived from monomers selected from the group consisting of a combination of a diamine and a dicarboxylic acid, a lactam, and an aminocarboxylic acid. With respect to the combination of a diamine and a dicarboxylic acid, a combination of one type of a diamine and one type of a dicarboxylic acid is regarded as one type of monomer unit.

As examples of diamines, there can be mentioned the same as mentioned above as examples of the raw materials for the aliphatic homopolyamide resin.

As examples of dicarboxylic acids, there can be mentioned the same as mentioned above as examples of the raw materials for the aliphatic homopolyamide resin.

As examples of lactams, there can be mentioned the same as mentioned above as examples of the raw materials for the aliphatic homopolyamide resin. Further, ε-caprolactam, ω-undecanelactam, and dodecanelactam (ω-laurolactam) can be used.

As examples of aminocarboxylic acids, there can be mentioned the same as mentioned above as examples of the raw materials for the aliphatic homopolyamide resin. Further, ε-aminocaproic acid, 11-aminoundecanoic acid, and 12-aminododecanoic acid can be used.

With respect to each of the diamine, dicarboxylic acid, lactam, and aminocarboxylic acid, these compounds may be used individually or in combination.

Specific examples of aliphatic copolymer polyamide resins include copolymers comprised of a combination of two or more monomers forming the polyamide mentioned above as examples of the aliphatic homopolyamide resins, and more specific examples include polyamide 4/6, polyamide 6/66, polyamide 6/69, polyamide 6/610, polyamide 6/611, polyamide 6/612, polyamide 6/10, polyamide 6/11, polyamide 6/12, polyamide 6/66/12, polyamide 6/66/11, polyamide 6/66/610, polyamide 6/66/612, polyamide 6/610/12, and polyamide 6/612/12. These aliphatic copolymer polyamide resins can be used individually or in combination.

Especially, from the viewpoint of the extrusion moldability for hollow molded article and the flexibility of the obtained molded article, the aliphatic copolymer polyamide resin is preferably at least one member selected from the group consisting of polyamide 6/12, polyamide 6/66/12, polyamide 6/11, polyamide 6/66/11, polyamide 6/610/12, and polyamide 6/612/12, more preferably at least one member selected from the group consisting of polyamide 6/12 and polyamide 6/66/12, and especially preferably polyamide 6/66/12.

When thermoplastic resin (d) is a polyamide resin other than polyamide 6, from the viewpoint of surely obtaining the rigidity and durability of the obtained molded article and causing the molten resin to have a viscosity in an appropriate range to surely achieve desired extrusion moldability for a molded article, the polyamide resin preferably has a relative viscosity of 2.5 to 5.0, and more preferably 3.0 to 4.5, as measured at 25°C with respect to 1 g of the resin dissolved in 100 ml of 96% sulfuric acid in accordance with JIS K 6920.

The polyamide resin other than polyamide 6 is produced by subjecting the polyamide raw materials to polymerization or copolymerization by a known method, such as melt polymerization, solution polymerization, or solid phase polymerization. In the polymerization, a catalyst, such as an amine, can be used. Further, after the polymerization, the obtained resin may be melt-kneaded. A catalyst can be added in an arbitrary stage during the polymerization, or in an arbitrary stage during the melt-kneading after the polymerization, but it is preferred that a catalyst is added in an arbitrary stage during the polymerization.

### [Other components]

The polyamide resin composition may further contain a conductive filler.

The term "conductive" means as follows. For example, when a flammable fluid, such as gasoline, is continuously in contact with an insulating material, such as a resin, there is a possibility that static electricity is accumulated in the resin to cause flaming. The term "conductive" indicates that the material has such electrical properties that static electricity is not accumulated in the material. Such properties enable prevention of explosion due to static electricity generated when carrying a fluid, such as a fuel.

The conductive filler includes all fillers added in order to impart conductivity to a resin, and examples include particulate fillers, flake fillers, and fibrous fillers.

Examples of particulate fillers include carbon black and graphite. Examples of flake fillers include aluminum flakes, nickel flakes, and nickel coated mica. Examples of fibrous fillers include a carbon fiber, a carbon coated ceramic fiber, a carbon whisker, a carbon nanotube, and metal fibers, such as an aluminum fiber, a copper fiber, a brass fiber, and a stainless steel fiber. These fillers can be used individually or in combination. Of these, a carbon nanotube and carbon black are preferred.

The carbon nanotube is called a hollow carbon fibril, and the fibril is an essentially cylindrical fibril having an outer region comprised of essentially continuous multiple layers of regularly arranged carbon atoms, and an inner hollow region, wherein the individual layers and the hollow region are substantially concentrically disposed around the cylinder axis of the fibril. Further, it is preferred that the regularly arranged carbon atoms in the outer region are in a graphite form, and that the diameter of the hollow region is 2 to 20 nm. From the viewpoint of the satisfactory dispersibility in the resin and imparting excellent conductivity to the obtained resin molded article, the outer diameter of the carbon nanotube is preferably 3.5 to 70 nm, and more preferably 4 to 60 nm. The aspect ratio (length/outer diameter ratio) of the carbon nanotube is preferably 5 or more, more preferably 100 or more, and further preferably 500 or more. When the carbon nanotube meets the above aspect ratio, a conductive network is easily formed, and the carbon nanotube added in a small amount can exhibit excellent conductivity.

The carbon black includes all the carbon blacks generally used for imparting conductivity, and examples of preferred carbon black include acetylene black obtained by subjecting acetylene gas to incomplete combustion, furnace black, such as ketjen black produced by furnace incomplete combustion of crude oil as a raw material, oil black, naphthalene black, thermal black, lamp black, channel black, roll black, and disc black, but the carbon black is not limited to these examples. These carbon blacks can be used individually or in combination. Of these, more preferred are acetylene black and furnace black.

Further, with respect to the carbon black, various types of carbon powders having different properties, such as a particle diameter, a specific surface area, a DBP oil absorption, and an ash content, are produced. With respect to the properties of the carbon black, there is no particular limitation, but preferred is carbon black having an excellent chain structure and a large aggregation density. From the viewpoint of the impact resistance, it is not preferred that a large amount of carbon black is incorporated into the composition, and, from the viewpoint of the obtaining excellent electrical conductivity by using carbon black in a smaller amount, the average particle diameter of the carbon black is preferably 500 nm or less, more preferably 5 to 100 nm, and further preferably 10 to 70 nm. The specific surface area (BET method) of the carbon black is preferably 10 m²/g or more, more preferably 30 m²/g or more, and further preferably 50 m²/g or more. The DBP (dibutyl phthalate) oil absorption of the carbon black is preferably 50 ml/100 g or more, more preferably 100 ml/100 g or more, and further preferably 150 ml/100 g or more. The ash content of the carbon black is preferably 0.5% by mass or less, and more preferably 0.3% by mass or less. The DBP oil absorption used here is a value as measured in accordance with the method described in ASTM D-2414. Further, the volatile content of the carbon black is preferably less than 1 % by mass.

The conductive filler may have been subjected to surface treatment with, for example, a titanate, aluminum, or silane surface treatment agent. Further, there can be used a conductive filler which has been subjected to granulation for improving the melt-kneading operating properties.

The amount of the conductive filler contained in the polyamide resin composition varies depending on the type of the conductive filler used, and hence cannot be generally determined, but, from the viewpoint of the balance between, for example, conductivity, fluidity, and mechanical strength, the amount of the conductive filler is generally preferably 3 to 30 parts by mass, relative to 100 parts by mass of the polyamide resin composition.

When the polyamide resin composition contains a conductive filler, from the viewpoint of obtaining satisfactory antistatic performance, the surface specific resistance of the molten extruded material is preferably 10⁸ Ω/square or less, and more preferably 10⁶ Ω/square or less. The addition of the conductive filler is likely to cause deterioration of the strength and fluidity. For this reason, the amount of the conductive filler contained is desirably as small as possible so that the conductivity level aimed at can be obtained.

Further, the polyamide resin composition, if necessary, may contain, for example, a phenolic or phosphorus antioxidant, a heat stabilizer, an ultraviolet light absorber, a light stabilizer, a spreading agent for an additive, a lubricant, an inorganic filler, an antistatic agent, a flame retardant, a crystallization promoter, or a colorant. These additives can be used individually or in combination. It is preferred that the polyamide resin composition does not contain a thickener for the polyamide resin.

### <Polyamide resin composition>

From the viewpoint of the extrusion moldability for hollow molded article and the rigidity and durability of the obtained molded article, the polyamide resin composition preferably has an MFR (at a temperature of 235°C and a load of 2.16 kg) of 0.1 to 20 g/10 minutes, more preferably 0.15 to 15 g/10 minutes, further preferably 0.18 to 10 g/10 minutes, and especially preferably 0.5 to 10 g/10 minutes, as measured by the method in accordance with ISO 1133.

### (Amount of the contained monomer units of the polyamide resin)

From an economical point of view and from the viewpoint of the rigidity, durability, and impact resistance of the obtained molded article, when thermoplastic resin (d) is an aliphatic copolymer polyamide resin, the amount of the contained monomer units derived from caprolactam and aminohexanoic acid (hereinafter, frequently referred to as "monomer units X"} is preferably 60.0 to 99.5% by mass, more preferably 70.0 to 99.3% by mass, further preferably 80.0 to 99.0% by mass, and especially preferably 96.0 to 98.0% by mass, based on the total mass of polyamide 6 (a) and the aliphatic copolymer polyamide resin (100% by mass).

From the viewpoint of the extrusion moldability for hollow molded article, when thermoplastic resin (d) is an aliphatic copolymer polyamide resin, the amount of the contained monomer units derived from laurolactam, aminododecanoic acid, undecanelactam, and aminoundecanoic acid (hereinafter, frequently referred to as "monomer units Z") is preferably 0.25 to 20.0% by mass, more preferably 0.35 to 15.0% by mass, further preferably 0.50 to 10.0% by mass, and especially preferably 1.0 to 3.5% by mass, based on the total mass of polyamide 6 (a) and the aliphatic copolymer polyamide resin (100% by mass).

From the viewpoint of the rigidity, durability, impact resistance, and heat resistance of the obtained molded article, when thermoplastic resin (d) is an aliphatic copolymer polyamide resin, the amount of the contained monomer units derived from adipic acid and hexamethylenediamine (hereinafter, frequently referred to as "monomer units Y") is preferably 0.25 to 20.0% by mass, more preferably 0.35 to 15.0% by mass, further preferably 0.50 to 10.0% by mass, and especially preferably 1.0 to 3.5% by mass, based on the total mass of polyamide 6 (a) and the aliphatic copolymer polyamide resin (100% by mass).

Especially, from the viewpoint of the extrusion moldability for hollow molded article and the rigidity, durability, impact resistance, and heat resistance of the obtained molded article, when thermoplastic resin (d) is an aliphatic copolymer polyamide resin, the ratio (mass ratio) of the amounts of monomer units X to Z contained in the total amount of polyamide 6 (a) and the aliphatic copolymer polyamide resin (100% by mass) is preferably 60.0 to 99.5:0.25 to 20.0:0.25 to 20.0, more preferably 70.0 to 99.3:0.35 to 17.5:0.35 to 17.5, further preferably 80.0 to 99.0:0.50 to 15.0:0.50 to 15.0, and especially preferably 93.0 to 98.0:1.00 to 3.50:1.00 to 3.50.

### [Method for producing the polyamide resin composition]

With respect to the method for producing the polyamide resin composition, there is no particular limitation, and, for example, the following method can be used.

As examples of the method for mixing polyamide 6 (a), polyolefin (b) having a functional group, plasticizer (c), and optional thermoplastic resin (d) and other components, there can be mentioned a method in which, using a tumbler and/or a mixer, pellets of polyamide 6 (a), polyolefin (b) having a functional group, and an optional component, with a liquid component, such as plasticizer (c), are uniformly dry blended so that the above-mentioned ratio of the components mixed is achieved; a method in which polyamide 6 (a), polyolefin (b) having a functional group, plasticizer (c), and an optional component are preliminarily dry blended in a concentration for the mixture to be molded, and then melt-kneaded; a method in which part of the components are blended and then melt-kneaded, and further the remaining components are added and melt-kneaded; and a method in which part of the components are blended and then, into the resultant blend being melt-kneaded are mixed the remaining components using a side feeder. With respect to the pellets, a masterbatch having the individual components mixed with thermoplastic resin (d) can be used. Melt-kneading can be conducted using a kneading machine, such as a single-screw extruder, a twin-screw extruder, a kneader, or a Banbury mixer.

### [Use of the polyamide resin composition]

The polyamide resin composition is advantageous not only in that the composition exhibits excellent extrusion moldability for a hollow molded article even when the hollow molded article is of a single layer, but also in that the molded article obtained from the composition has excellent flexibility and excellent impact resistance as well as excellent durability, and therefore the polyamide resin composition can be advantageously used for a single-layer hollow molded article.

### [Method for producing a single-layer hollow molded article]

The single-layer hollow molded article can be produced by subjecting the polyamide resin composition to extrusion molding using, e.g., an extrusion molding machine into a tube form, a hose form, or other forms.

With respect to the method for producing a single-layer hollow molded article from the polyamide resin composition by extrusion molding, there is no particular limitation, and a conventionally known method can be used. Generally, a method may be conducted in which a molten resin is extruded using a general extrusion molding machine and then extruded through a die. With respect to the preferred resin temperature during extrusion molding, extrusion is preferably conducted in the range of temperatures higher than the melting temperature of the polyamide resin composition by 10 to 70°C.

### [Single-layer hollow molded article]

With respect to the single-layer hollow molded article, for example, the outer surface or inner surface of the hollow molded article may be subjected to painting or coating as long as the effects aimed at by the present invention are not sacrificed.

Examples of the single-layer hollow molded articles include a tank, a tube, a pipe, a hose, a duct, and a housing. Especially, preferred is at least one selected from the group consisting of a pipe, a tube, a hose, and a tank. The hollow molded article substantially does not use polyamide 11 and polyamide 12, and has properties equivalent to those of a multi-layer hollow molded article using the polyamide 11 and polyamide 12, and has excellent barrier properties for a chemical liquid and gas and excellent tensile strength, and further is of a single layer, and therefore the hollow molded article is economically excellent and has excellent production stability.

### [Use of the single-layer hollow molded article]

Examples of uses of the single-layer hollow molded article include automotive parts, such as a spoiler, an air intake duct, a resonator, a fuel tank, a gas tank, a hydraulic oil tank, a fuel filler tube, a fuel delivery pipe, and other various types of hoses, tubes, and tanks; mechanical parts, such as a housing for electric tool, and pipes; electric and electronic parts, such as a tank, a tube, and a hose; household and office products, building material related parts, and furniture parts.

### EXAMPLES

Hereinbelow, the present invention will be described in more detail with reference to the following Examples and Comparative Examples, which should not be construed as limiting the scope of the present invention.

The analyses and measurement methods for physical properties in the Examples and Comparative Examples and the raw materials used in the Examples and Comparative Examples are shown below.

The physical properties of the polyamide resin composition and raw materials were measured by the methods described below.

### [Relative viscosity]

With respect to the polyamide resin, a relative viscosity was measured at 25°C by the method in accordance with JIS K 6920 using a solution obtained by dissolving 1 g of the resin in 100 ml of 96% sulfuric acid.

### [Fluidity (MFR)]

As an index of the fluidity of a polyamide resin composition, an MFR (at a temperature of 235°C and a load of 2.16 kg) was measured by the method in accordance with ISO 1133. A composition having an MFR of 0.1 to 20 g/10 minutes was judged to have excellent fluidity.

### [Preparation of a test specimen]

With respect to the polyamide resin composition, a test specimen was prepared using an injection molding machine SE100D-C160S, manufactured by Sumitomo Heavy Industries, Ltd., in accordance with ISO 294-1.

### [Flexibility (flexural modulus)]

Using the obtained test specimen, a flexural modulus was measured by the method in accordance with ISO 178. A specimen having a flexural modulus of 1,800 MPa or less was judged to have excellent flexibility, and a specimen having a flexural modulus of 1,500 MPa or less was judged to have especially excellent flexibility.

### [Impact resistance (Charpy impact strength)]

Using the obtained test specimen, a Charpy impact strength was measured by the method in accordance with ISO 179/1eA. A specimen having a Charpy impact strength of 40 kJ/m² or more was judged to have satisfactory impact resistance, and a specimen having a Charpy impact strength of 50 kJ/m² or more was judged to have especially excellent impact resistance.

### [Durability against tensile load (tensile elongation at break)]

Using the obtained test specimen, a tensile elongation at break was measured by the method in accordance with ISO 527-1, 2. A specimen having a tensile elongation at break of 150% or more was judged to have satisfactory durability, and a specimen having a tensile elongation at break of 170% or more was judged to have especially excellent durability.

A hollow molded article was prepared by the method described below, and physical properties of the hollow molded article were measured.

### [Preparation of a hollow molded article]

Using the polyamide resin composition, a tubular article (referred to also as "tube") having an outer diameter of 8 mm and a thickness of 1 mm as target values was molded by means of PAL32 (manufactured by Maillefer SA) single-layer tube extrusion molding machine at an extrusion molding temperature set to 220 to 260°C.

### [Tube molding stability]

With respect to the molding stability for a tube in drawing by means of an extrusion molding machine, evaluation was made in accordance with the following criteria.
○: Continuous molding is possible, and no pulsation is caused and stable molding can be made.
Δ: Continuous molding is possible, but pulsation is caused and the tube dimension is unstable.
×: Continuous molding is impossible, and pulsation is caused.

### [Moldability (resin pressure)]

Extrusion molding for a tube was conducted and a resin pressure of the extrusion molding machine was measured during the extrusion molding. In the measurement, a value of a pressure gauge attached to the extrusion molding machine was read. The lower pressure can reduce a load on the apparatus, enabling stable continuous molding. When the resin pressure was 150 bar or less, the moldability was judged to be excellent, and, when the resin pressure was 115 bar or less, the moldability was judged to be especially excellent.

### [Durability of a specimen in a tubular form against tensile load (tensile elongation at break)]

The obtained tube was cut into a length of 200 mm to obtain a test specimen. Using the obtained test specimen, a tensile elongation at break was measured by the method in accordance with SAE J2260. A specimen having a tensile elongation at break of 100% or more was judged to have satisfactory durability, and a specimen having a tensile elongation at break of 150% or more was judged to have especially excellent durability.

### [Appearance of a tube]

The appearance of the obtained tube was evaluated in accordance with the following criteria.
○: Appearance is such excellent that there is no irregularity of the dimension and surface.
Δ: Appearance is partially poor such that there is no irregularity of the dimension and no surface waviness but chatter marks are caused.
×: Appearance is such poor that irregularity of the dimension or surface waviness is caused.

### [Micro-protrusion is caused or not]

The obtained tube was macroscopically inspected as to whether the tube had a micro-protrusion, and evaluated in accordance with the following criteria.
○: There is no macroscopically recognizable micro-protrusion.
×: Macroscopically recognizable micro-protrusion is caused.

### [Materials used in Examples and Comparative Examples]

Polyamide 6 (a): manufactured by UBE Corporation; relative viscosity: 4.08
Polyolefin (b) having a functional group: TAFMER (registered trademark) MH5020 (manufactured by Mitsui Chemicals, Inc., maleic anhydride-modified ethylene/1-butene copolymer; acid anhydride concentration: 100 mmol/kg)
Plasticizer (c): Proviplast (registered trademark) 024 (manufactured by Proviron, Inc., butylbenzenesulfonamide)
Thermoplastic resin (d-1): Polyamide 6/66/12 in which the mass ratio (X:Y:Z) of monomer units X derived from caprolactam and aminohexanoic acid, monomer units Y derived from adipic acid and hexamethylenediamine, and monomer units Z derived from laurolactam and aminododecanoic acid is as follows: X:Y:Z = 78:11:11 (manufactured by UBE Corporation; relative viscosity: 3.85)
Thermoplastic resin (d-2): Polyamide 6/12 in which the mass ratio (X:Z) of monomer units X derived from caprolactam and aminohexanoic acid and monomer units Z derived from laurolactam and aminododecanoic acid is as follows: X:Z = 80:20 (manufactured by UBE Corporation; relative viscosity: 4.08)
Antioxidant: 9:1 Mixture of triethylene glycol-bis[3-(3-t-butyl-5-methyl-4-hydroxyphenyl)propionate] (IRGANOX (registered trademark) 245, manufactured by BASF Japan Ltd.) and tris(2,4-di-t-butylphenyl) phosphite (IRGAFOS (registered trademark) 168, manufactured by BASF Japan Ltd.)

### Example 1

### Production of polyamide resin composition (A-1)

Polyolefin (b) having a functional group and an antioxidant were preliminarily mixed into polyamide 6 (a), and fed to a twin-screw melt-kneading machine (manufactured by Coperion GmbH; model: ZSK) while plasticizer (c) was charged from the middle of the cylinder of the twin-screw melt-kneading machine by means of a metering pump, and the resultant mixture was melt-kneaded at a cylinder temperature of 230 to 250°C, and the molten resin was extruded into a strand form. The obtained extruded material was directly introduced into a water bath, and cooled and cut, followed by vacuum drying, to obtain pellets of polyamide resin composition (A-1) comprising polyamide 6 (a)/polyolefin (b) having a functional group/plasticizer (c)/antioxidant (= 77.0/12.0/10.0/1.0 (mass ratio)).

### Examples 3 to 7 and Comparative Examples 1 and 2

Pellets of polyamide resin compositions (A-3) to (A-7), (A-9), and (A-10) were obtained in substantially the same manner as in Example 1 except that the amounts of the components incorporated were changed to those shown in Table 1.

### Example 2

### Production of polyamide resin composition (A-2)

Polyolefin (b) having a functional group, thermoplastic resin (d-1), and an antioxidant were preliminarily mixed into polyamide 6 (a), and fed to a twin-screw melt-kneading machine (manufactured by Coperion GmbH; model: ZSK) while plasticizer (c) was charged from the middle of the cylinder of the twin-screw melt-kneading machine by means of a metering pump, and the resultant mixture was melt-kneaded at a cylinder temperature of 230 to 250°C, and the molten resin was extruded into a strand form. The obtained extruded material was directly introduced into a water bath, and cooled and cut, followed by vacuum drying, to obtain pellets of polyamide resin composition (A-2) comprising polyamide 6 (a)/polyolefin (b) having a functional group/plasticizer (c)/thermoplastic resin (d-1)/antioxidant (= 67.0/12.0/10.0/10.0/1.0 (mass ratio)).

In polyamide resin composition (A-2), monomer units X derived from caprolactam and aminohexanoic acid were contained in an amount of 97.14% by mass, monomer units Y derived from adipic acid and hexamethylenediamine were contained in an amount of 1.43% by mass, and monomer units Z derived from laurolactam and aminododecanoic acid were contained in an amount of 1.43% by mass, based on the total mass of polyamide 6 (a) and thermoplastic resin (d-1) (100% by mass).

### Example 8

### Production of polyamide resin composition (A-8)

Pellets of polyamide resin composition (A-8) comprising polyamide 6 (a)/polyolefin (b) having a functional group/plasticizer (c)/thermoplastic resin (d-2)/antioxidant (= 67.0/12.0/10.0/10.0/1.0 (mass ratio)) were obtained by substantially the same method as in Production of polyamide resin composition (A-2) except that thermoplastic resin (d-1) was changed to thermoplastic resin (d-2).

In polyamide resin composition (A-8), monomer units X derived from caprolactam and aminohexanoic acid were contained in an amount of 97.40% by mass, and monomer units Z derived from laurolactam and aminododecanoic acid were contained in an amount of 2.60% by mass, based on the total mass of polyamide 6 (a) and thermoplastic resin (d-2) (100% by mass).

### Comparative Example 3

### Production of polyamide resin composition (A-11)

Pellets of polyamide resin composition (A-11) comprising polyamide 6 (a)/polyolefin (b) having a functional group/thermoplastic resin (d-1)/antioxidant (= 77.0/12.0/10.0/1.0 (mass ratio)) were obtained by substantially the same method as in Production of polyamide resin composition (A-2) except that plasticizer (c) was not used and that the amount of polyamide 6 (a) was changed.

In polyamide resin composition (A-11), monomer units X derived from caprolactam and aminohexanoic acid were contained in an amount of 97.48% by mass, monomer units Y derived from adipic acid and hexamethylenediamine were contained in an amount of 1.26% by mass, and monomer units Z derived from laurolactam and aminododecanoic acid were contained in an amount of 1.26% by mass, based on the total mass of polyamide 6 (a) and thermoplastic resin (d-1) (100% by mass).

The formulations of the compositions in Examples 1 to 8 and Comparative Examples 1 to 3 and the results of the evaluation of pellets of the compositions and molded articles obtained from the pellets are shown in Table 1. With respect to Comparative Example 1, the molding stability for a tube was too poor to form a tube, and therefore evaluation of the tensile elongation at break, appearance, and presence or absence of micro-protrusions of a tube was not able to be conducted.

### [Table 1]

**[Table 1]**

| | | | Example1 | Example2 | Example3 | Example4 | Example5 | Example6 | Example7 | Example8 | Comparative Example 1 | Comparative Example 2 | Comparative Example 3 |
|---|---|---|---|---|---|---|---|---|---|---|---|---|---|
| Composition | Polyamide resin composition | | A-1 | A-2 | A-3 | A-4 | A-5 | A-6 | A-7 | A-8 | A-9 | A-10 | A-11 |
| | Polyamide 6 (a) | % | 77.0 | 67.0 | 74.0 | 69.0 | 72.0 | 84.0 | 82.0 | 67.0 | 100.0 | 89.0 | 77.0 |
| | Polyolefin (b) having functional group | % | 12.0 | 12.0 | 15.0 | 20.0 | 12.0 | 5.0 | 12.0 | 12.0 | - | - | 12.0 |
| | Plasticizer (c) | % | 10.0 | 10.0 | 10.0 | 10.0 | 15.0 | 10.0 | 5.0 | 10.0 | - | 10.0 | - |
| | Themoplastic resin (d-1) | % | - | 10.0 | - | - | - | - | - | - | - | - | 10.0 |
| | Themoplastic resin (d-2) | % | - | - | - | - | - | - | - | 10.0 | - | - | - |
| | Antioxidant | % | 1.0 | 1.0 | 1.0 | 1.0 | 1.0 | 1.0 | 1.0 | 1.0 | - | 1.0 | 1.0 |
| | Total | % | 100.0 | 100.0 | 100.0 | 100.0 | 100.0 | 100.0 | 100.0 | 100.0 | 100.0 | 100.0 | 100.0 |
| Amount of monomer units, based on total mass of polyamide 6 (a) and aliphatic copolymer polyamide resin (100% by mass) | Monomer units derived from caprolactam and aminohexanoic acid | % | 100.0 | 97.14 | 100.0 | 100.0 | 100.0 | 100.0 | 100.0 | 97.4 | 100.0 | 100.0 | 97.48 |
| | Monomer units derived from laurolactam, aminododecanoic acid, undecanelactam, and aminoundecanoic acid | % | 0.0 | 1.43 | 0.0 | 0.0 | 0.0 | 0.0 | 0.0 | 2.6 | 0.0 | 0.0 | 1.26 |
| | Monomer units derived from adipic acid and hexamethylenediamine | % | 0.0 | 1.43 | 0.0 | 0.0 | 0.0 | 0.0 | 0.0 | 0.0 | 0.0 | 0.0 | 1.26 |
| Physical properties | MFR | g/10 min | 1.2 | 0.2 | 1.4 | 0.8 | 3.2 | 2.8 | 0.9 | 1.4 | 2.6 | 3.6 | <0.1 |
| | Flexural modulus | MPa | 1,010 | 1,280 | 770 | 590 | 480 | 804 | 1,796 | 840 | 2,700 | 1,900 | 2,032 |
| | Charpy impact strength | kJ/m² | 117 | 136 | 116 | 143 | 56 | 121 | 77 | 125 | 8 | 11 | 128 |
| | Tensile elongation at break | % | 224 | 195 | 220 | 185 | 270 | 228 | 155 | 230 | 157 | 130 | 130 |
| Moldability | Tube molding stability | | ○ | ○ | ○ | ○ | ○ | ○ | ○ | ○ | × | Δ | ○ |
| | Resin pressure | bar | 105 | 104 | 106 | 115 | 87 | 89 | 83 | 87 | >150 | 62 | 86 |
| Tube | Tensile elongation at break | % | 105 | 189 | 122 | 120 | 128 | 130 | 100 | 134 | - | 101 | 173 |
| | Appearance | | Δ | ○ | ○ | ○ | ○ | Δ | ○ | Δ | - | × | ○ |
| | Micro-protrusion caused or not | | ○ | ○ | ○ | ○ | ○ | ○ | ○ | ○ | - | × | ○ |

From Table 1, it is apparent that, with respect to the compositions in Examples 1 to 8, each of which contains polyamide 6 (a) having a relative viscosity of 3.0 to 4.5, polyolefin (b) having a functional group, and plasticizer (c), wherein polyamide 6 (a) is contained in an amount of 60 to 90% by mass, polyolefin (b) having a functional group is contained in an amount of 3 to 25% by mass, and plasticizer (c) is contained in an amount of 3 to 20% by mass, based on the mass of the polyamide resin composition (100% by mass), when a single-layer hollow molded article is produced from the composition by an extrusion molding method, the resin pressure is low, the tube molding stability and appearance are excellent, and the flexibility, impact resistance, and durability of the molded article are excellent. Particularly, with respect to the composition in Example 2, which has incorporated components (a) to (c) and, as thermoplastic resin (d), polyamide 6/66/12 (in which monomer units X derived from caprolactam and aminohexanoic acid are contained in an amount of 97.14% by mass, monomer units Y derived from adipic acid and hexamethylenediamine are contained in an amount of 1.43% by mass, and monomer units Z derived from laurolactam and aminododecanoic acid are contained in an amount of 1.43% by mass, based on the total mass of polyamide 6 (a) and thermoplastic resin (d) (100% by mass)), a single-layer hollow molded article produced from the composition has extremely high tensile elongation at break and excellent durability.

With respect to the composition in Comparative Example 1, which uses polyamide 6 (a) but does not contain polyolefin (b) having a functional group and plasticizer (c), the resin pressure during the tube molding was high, and the tube molding stability was poor, and the flexibility and impact resistance of the molded article were poor. With respect to the composition in Comparative Example 2, which contains polyamide 6 (a) and plasticizer (c) but does not contain polyolefin (b) having a functional group, the tube molding stability was poor and the appearance of the tube was poor, and the flexibility, impact resistance, and durability of the molded article were poor. With respect to the composition in Comparative Example 3, which has incorporated thermoplastic resin (d-1) instead of plasticizer (c), the fluidity of the composition and the flexibility and durability of the molded article were poor.

### Industrial Applicability

The polyamide resin composition of the present invention can be advantageously used in producing a single-layer hollow molded article.

## Claims

1. A polyamide resin composition for extrusion molding, which is used for producing a single-layer hollow molded article, the polyamide resin composition comprising a polyamide 6 (a), a polyolefin (b) having a functional group, and a plasticizer (c),
the polyamide 6 (a) having a relative viscosity of 3.0 to 4.5, as measured at 25°C with respect to 1 g of the polyamide 6 (a) dissolved in 100 ml of 96% sulfuric acid in accordance with JIS K 6920,
wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition,
wherein the polyolefin (b) having a functional group is a copolymer of ethylene and an α-olefin having 4 or more carbon atoms, which has a group derived from at least one member selected from the group consisting of maleic anhydride and itaconic anhydride.

2. A polyamide resin composition for extrusion molding, which is used for producing a single-layer hollow molded article, the polyamide resin composition comprising a polyamide 6 (a), a polyolefin (b) having a functional group, and a plasticizer (c),
the polyamide 6 (a) having a relative viscosity of 3.0 to 4.5, as measured at 25°C with respect to 1 g of the polyamide 6 (a) dissolved in 100 ml of 96% sulfuric acid in accordance with JIS K 6920,
wherein the polyamide 6 (a) is contained in an amount of 66 to 89% by mass, the polyolefin (b) having a functional group is contained in an amount of 3 to 25% by mass, and the plasticizer (c) is contained in an amount of 3 to 20% by mass, based on 100% by mass of the polyamide resin composition,
wherein the polyolefin (b) having a functional group is a copolymer of ethylene and an α-olefin having 3 or more carbon atoms, which has a group derived from at least one member selected from the group consisting of maleic anhydride and itaconic anhydride.

3. A polyamide resin composition for extrusion molding, which is used for producing a single-layer hollow molded article, the polyamide resin composition comprising a polyamide 6 (a), a polyolefin (b) having a functional group, and a plasticizer (c), and containing substantially zero ethylene-vinyl acetate,
the polyamide 6 (a) having a relative viscosity of 3.0 to 4.5, as measured at 25°C with respect to 1 g of the polyamide 6 (a) dissolved in 100 ml of 96% sulfuric acid in accordance with JIS K 6920,
wherein the polyamide 6 (a) is contained in an amount of 60 to 90% by mass, the polyolefin (b) having a functional group is contained in an amount of 3 to 25% by mass, and the plasticizer (c) is contained in an amount of 3 to 20% by mass, based on 100% by mass of the polyamide resin composition,
wherein the polyolefin (b) having a functional group is a copolymer of ethylene and an α-olefin having 3 or more carbon atoms, which has a group derived from at least one member selected from the group consisting of maleic anhydride and itaconic anhydride.

4. The polyamide resin composition according to any one of claims 1 to 3, wherein the polyolefin (b) having a functional group is an ethylene/1-butene copolymer having a group derived from at least one member selected from the group consisting of maleic anhydride and itaconic anhydride.

5. The polyamide resin composition according to any one of claims 1 to 3, wherein the plasticizer (c) is at least one member selected from the group consisting of an alkylbenzenesulfonamide, an alkyltoluenesulfonamide, and an alkyl hydroxybenzoate.

6. The polyamide resin composition according to any one of claims 1 to 3, which contains a thermoplastic resin (d) other than the polyamide 6 (a) and the polyolefin (b) having a functional group.

7. The polyamide resin composition according to claim 6, wherein the thermoplastic resin (d) is an aliphatic copolymer polyamide resin.

8. The polyamide resin composition according to claim 7, wherein the aliphatic copolymer polyamide resin is at least one member selected from the group consisting of polyamide 6/12, polyamide 6/66/12, polyamide 6/11, polyamide 6/66/11, polyamide 6/610/12, and polyamide 6/612/12.

9. The polyamide resin composition according to claim 7, wherein monomer units derived from caprolactam and aminohexanoic acid are contained in an amount of 60.0 to 99.5% by mass, based on 100% by mass of the total of the polyamide 6 (a) and the aliphatic copolymer polyamide resin.

10. The polyamide resin composition according to claim 7, wherein monomer units derived from laurolactam, aminododecanoic acid, undecanelactam, and aminoundecanoic acid are contained in an amount of 0.25 to 20.0% by mass, based on 100% by mass of the total of the polyamide 6 (a) and the aliphatic copolymer polyamide resin.

11. The polyamide resin composition according to claim 7, wherein monomer units derived from adipic acid and hexamethylenediamine are contained in an amount of 0.25 to 20.0% by mass, based on 100% by mass of the total of the polyamide 6 (a) and the aliphatic copolymer polyamide resin.

12. A single-layer hollow molded article comprising the polyamide resin composition according to any one of claims 1 to 3.

13. The single-layer hollow molded article according to claim 12, which is at least one selected from the group consisting of a pipe, a tube, a hose, and a tank.
